# EUROPEAN PATENT SPECIFICATION

(11) **EP 1 528 696 B1**
(45) Date of publication and mention of the grant of the patent: **01.04.2009**
(21) Application number: 02807601.6
(22) Date of filing: 26.12.2002
(51) Int. Cl.: H04B 10/12, G02B 6/00, C03C 13/04

(54) **DEVICE FOR PROTECTING FIBRE LINES AGAINST DESTRUCTION BY LASER RADIATION**
VORRICHTUNG ZUM SCHUTZ VON FASERSTRECKEN GEGEN ZERSTÖRUNG DURCH LASERSTRAHLUNG
DISPOSITIF POUR PROTEGER LES LIGNES A FIBRES DE LA DESTRUCTION SOUS L'EFFET DU RAYONNEMENT LASER

(30) Priority: 12.07.2002 RU 2002118838
(43) Date of publication of application: 04.05.2005
(73) Proprietor: Nauchny Tsentr Volokonnoi Optiki Pri Institute Obschei Fiziki Imeni A.M.Prokhorova Rossyskoi Akademii Nauk, Moscow 119991 (RU)
(72) Inventor: DIANOV, Evgeny Mikhailovich, Moscow, 117071 (RU); BUFETOV, Igor Alexeevich, Moskovskaya obl., 141400 (RU); FROLOV, Artem Alexeevich, Moskovskaya obl. 141077 (RU)
(74) Representative: Held, Stephan
(86) International application number: PCT/RU2002/000561
(87) International publication number: WO 2004/008665

(56) References cited:
- EP-A- 1 146 669
- EP-A2- 1 146 669
- GB-A- 2 356 262
- RU-C1- 2 142 184
- US-A- 5 022 734
- US-A- 5 710 848
- HAND D. P., BIRKS T.A.: "Single-Mode Tapers as "Fibre Fuse" Damage Circuit Breakers" ELECTRONICS LETTERS, vol. 25, no. 1, 5 January 1989 (1989-01-05), pages 33-34, XP009072464
- BOUCOUVALAS A. C., GEORGIOU G: "Tapering of single-mode optical fibres" IEE PROCEEDINGS J (OPTOELECTRONICS), vol. 133, no. 6, 1 December 1986 (1986-12-01), pages 385-392, XP009072545 UK

## Description

The present invention relates to laser engineering and fibre optics and is applicable in optical communication systems, fibre laser devices for treating materials, and in medicine and other fields where optical radiation of the order of 1 Watt and higher of optical power is transmitted through optical fibres.

As of now, the information transmission velocity is drastically growing in optical communication systems.

The increased velocity of information transmission through optical fibres necessitates a great number of channels to be carried by a single optical fibre, using the wavelength division multiplexing (WDM). There is also a growing demand to use optical amplifiers in optical communication lines.

The increase of the number of channels transmitted over a single optical fibre, the use of optical amplifiers (both erbium optical amplifiers having a great output power, and Raman fibre amplifiers), and input of optical amplifier pumping light into an optical fibre even now lead to increase of the average optical radiation power in the optical fibre up to the level of the order of 1 Watt.

At such power levels, the phenomenon of destruction of optical fires by optical radiation may occur. This phenomenon in silica glass fibres (it is just such fibres form the basis of current optical communication lines) is referred to as "catastrophic damage" or "fuse effect". Actually, the optical fibre destruction by laser radiation resembles burning of a blasting fuse.

In this description, the above phenomenon will be referred to as propagation of a subsonic optical discharge wave (i.e. travelling at a subsonic velocity) through an optical fibre, which reflects the physical nature of occurring processes, or, for brevity, as an optical discharge wave propagation.

Information about destruction of single-mode optical fibres by optical radiation was first published in 1987 (Raman Kashyap, Self-Propelled Self-Focusing Damage in Optical Fibres, Proc. Conf. Lasers'87, Lake Tahoe, Nevada, Dec. 7-11, 1987, pp.859-866).

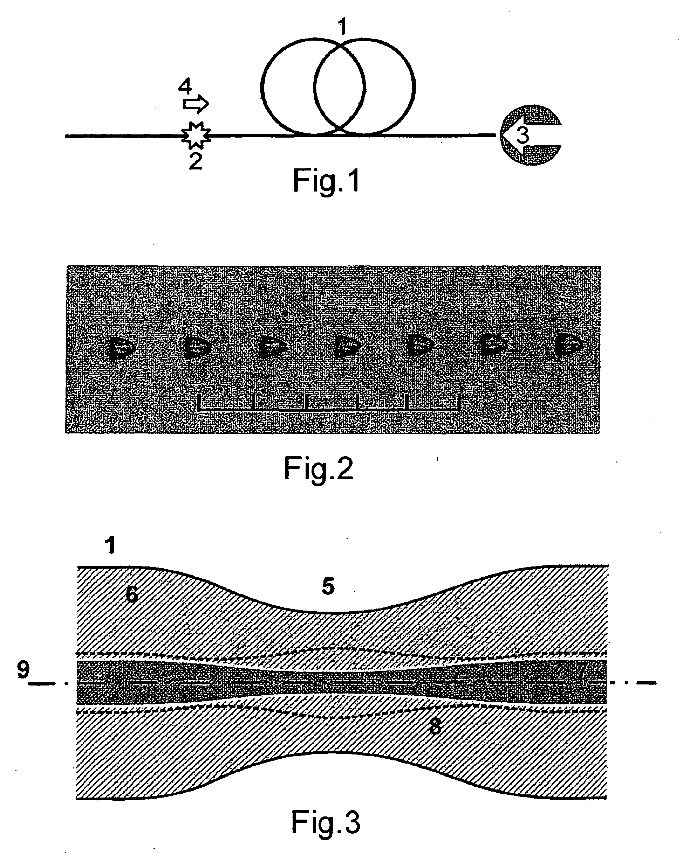

The above work substantially demonstrated that where a laser radiation of the order of 1 Watt of optical power propagates over an optical fibre, there may appear an optical discharge wave; see Fig.1, where 1 is an optical fibre, 2 is a plasma glow region in the optical discharge wave; 3 is the arrow showing the direction of laser radiation input to the optical fibre, and 4 is the arrow showing the direction of optical discharge wave travelling through the optical fibre. But the authors of the aforementioned work interpreted the phenomenon in a different way. Externally it looks like the movement of a bright white or bluish glow region (looking like a small "star") through the optical fibre core, which propagates towards the laser radiation with a velocity of about 1 m/s. The bright glow region is a low-temperature plasma region. The "star" temperature was estimated to be about 5400K on the basis of its glow spectrum (see D.P. Hand, P.St.J. Russel, Solitary thermal shock waves and optical damage in optical fibres: the fibre fuse. Optics Letters, Vol.13, No.9, pp.767-769, 1988).

But the process does not appear spontaneously when the above power is input to an optical fibre. To initiate the process, it is required to create in the optical fibre, in which a radiation of the order of 1 Watt power exists, a region of increased laser radiation absorption, e.g. by heating a section of the optical fibre up to about 1000°C (in electric arc or by a burner), applying a laser radiation absorbing substance on the optical fibre end face, or by bending the optical fibre at a reasonably small radius. In particular, the process of optical discharge wave propagation can be initiated by touching the output end of the optical fibre (the end from which laser radiation is output) with a light absorbing surface (including metallic one).

Actually, after initiating the process in the fibre core there is generated a dense plasma, which on one hand absorbs the radiation propagating through the optical fibre, and on the other hand, transfers heat energy to surrounding cold material layers by thermal conductance. The so-heated core regions lying in the laser radiation field begin, in turn, to absorb the radiation. Therein lies the mechanism of optical discharge propagation through the optical fibre core, which is similar to the mechanism of propagation of slow chemical combustion front in gases and solids (L.D. Landau, E.M. Lifshitz, Hydrodynamics, Moscow, Nauka, 1986 (Chapter XIV, §128, Slow combustion, pp. 662-670). The term "slow" has here the meaning of "propagating with subsonic speed".

Upon propagation of the discharge wave, cavities (or voids) of size about several micrometers are formed in the optical fibre core in most cases, wherein the cavities may generate a periodic structure along the fibre core (see Fig.2). Formation of such cavities completely breaks down the optical fibre light-guiding properties.

A method is known for protecting optical communication lines against complete destruction when an optical discharge wave appears in the fibre (D.P. Hand, T.A. Birks, Single-mode tapers as 'fibre fuse' damage circuit-breakers, Electronics Letters, vol.25, No.1, pp 33-34, 1989).

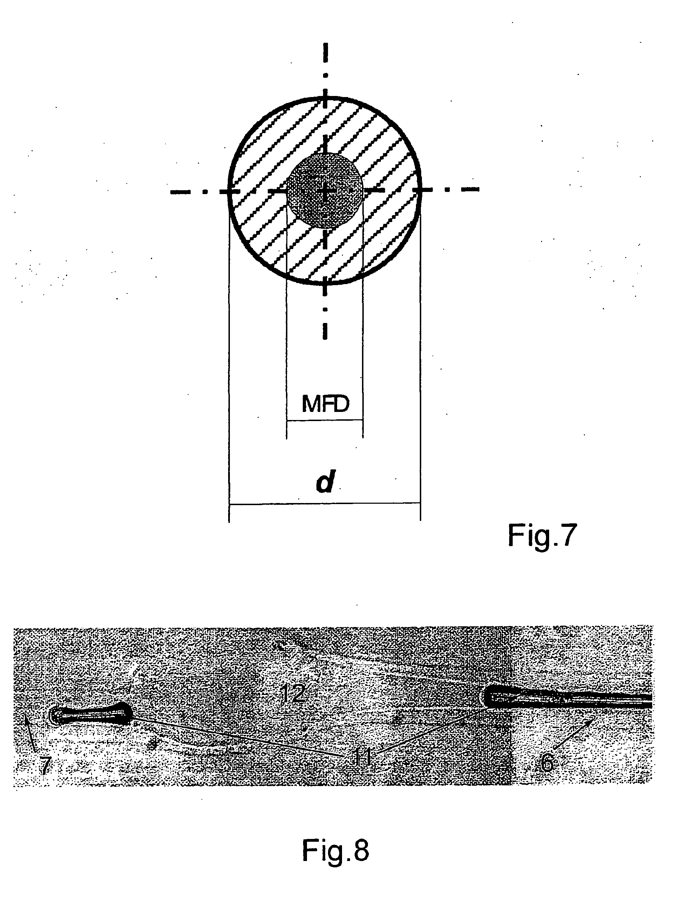

The method involves providing and employing unique circuit-breakers against propagation of an optical discharge wave through optical fibres. It is known that the process of optical fibre destruction by radiation substantially depends on the laser radiation intensity in the optical fibre. To reduce the laser radiation intensity at least at some section of an optical communication line, the authors proposed to include into the optical fibre line an optical fibre section having a waist, see Fig.3, where 5 is an optical fibre waist region; 6 is a reflecting cladding of the optical fibre, made preferably of silica, hatched in Fig.3; 7 is the optical fibre core; 8 is the dashed line showing boundaries of the laser radiation mode field in the optical fibre and its change with the core diameter; and 9 is the centreline of the optical fibre. As can be seen at Fig.3, the optical fibre section with a waist is a section of the optical fibre, at a part of which the fibre cross-section diameter is reduced, all of the other dimensions defining the fibre cross-section structure, e.g. the optical fibre core diameter, being also reduced in proportion. The waist in Fig.3 can be considered as a combination of two series connected tapers. When light passes through the waist region, the mode field diameter in the optical fibre changes (increases), this resulting in reduction of the radiation intensity and, under favourable conditions, arresting the optical discharge propagation process. The mode field diameter, often referred to as MFD, implies the value commonly used in fibre optics, which defines the lateral dimension of the spatial region occupied by radiation field in a single-mode optical fibre, as it is defined e.g. in book by G. Keiser. Optical Fibre Communications. (Third edition) McGraw Hill, pp. 63-64, 2000 and references in it.

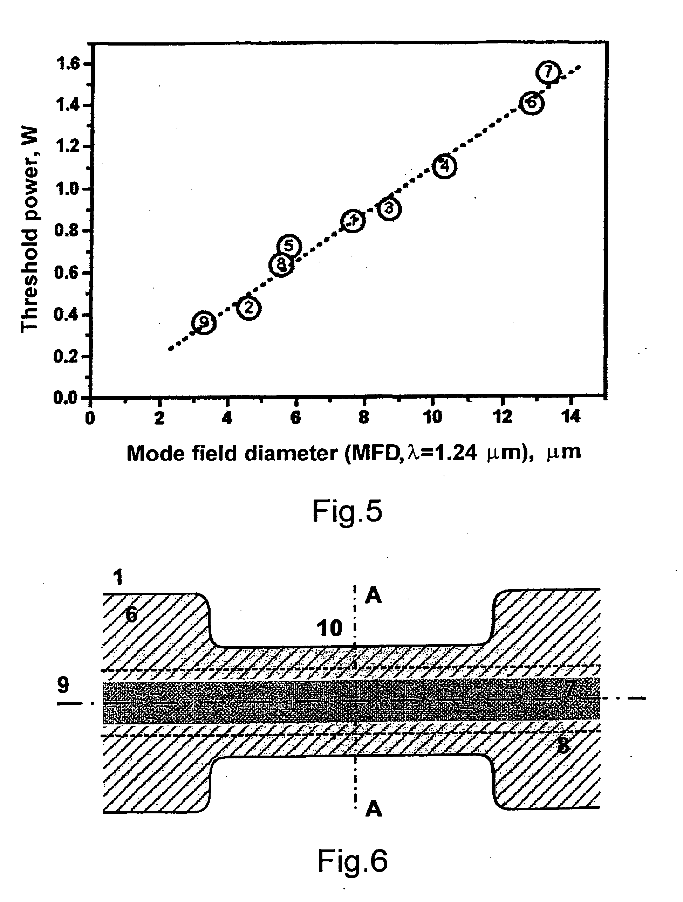

Fig.5 shows a plot of the relationship obtained experimentally by measuring the dependence of the minimal laser radiation power in the optical fibre core required to sustain the optical discharge wave on mode field diameter for optical fibres of different types: germanosilicate fibres (i.e. with the core containing mainly SiO₂ and GeO₂) and phosphosilicate fibre (i.e. with the core containing mainly SiO₂ and P₂O₅). Numerals near experimental points indicate the optical fibre type: 1 - phosphosilicate fibre, 2-7 - germanosilicate fibres. With increasing the mode field diameter in the optical fibre, the threshold power value needed to sustain the optical discharge propagation increases. The most pertinent prior art is based on this effect.

As the result, only a fibre section between the discharge wave initiation point and arrest point is damaged, rather than the entire optical fibre line. The authors emphasize that the method implemented in a device is suitable for only single-mode fibres, since just in such optical fibres with the waist included in the line the radiation intensity can be reduced. Therefore, the method arrests undesirable processes and protects against damage the communication line portion which lies between the described optical fibre section and the laser radiation source.

The prior art device for protecting optical communication lines suffers from the following basic disadvantages:
a) The optical fibre core parameters are changed in the device, which could result in additional losses and distortion of useful signal, e.g. due to partial reflection thereof;
b) As power increases, the radiation intensity increases in the optical fibre core, including the waist region, this leading to uninterrupted passage of the optical discharge wave through the waist region. Thus, the device loses its efficiency when the radiation power increases.

Disadvantages of the prior art device further include complexity of its manufacture, requiring that the optical fibre be heated and precisely stretched.

To provide unambiguous understanding of the matter of the present invention, the authors have introduced in the description a number of definitions of optical fibre parameters. There has been introduced parameter *d* of the optical fibre cross-section. The cross-section parameter *d* of the optical fibre section under consideration is defined as a diameter of a fused quartz cladding of the optical fibre in the cross-section under consideration, if the optical fibre possesses cylinder symmetry with respect to the axis, and the parameter *d* is defined as double minimal distance from the geometric centre of the optical fibre core cross-section to the fused quartz cladding boundary, if the shape of optical fibre does not possess cylinder symmetry (in case of cylindrical optical fibre, the parameter definition coincides with the definition of *d* presented above as the optical fibre cladding diameter).

In light of the above, the object of the present invention is to provide a device for protecting fibre lines against destruction by optical discharge wave propagating through the optical fibre exposed to laser radiation, which would maintain its efficiency when the laser radiation power increases, without introducing additional optical losses into the optical communication line.

The above object is attained by providing a device for protecting a fibre line against destruction by laser radiation, comprising a section of an optical fibre having a core with a constant diameter throughout the length of the section, and a cladding of the optical fibre section, said cladding having at least at one part of length *L* ≥ *10·D* of said optical fibre section a cross-section parameter d in the range *D* < *d* ≤ *min* (*4D, 40* µ*m*), where *D* is the mode field diameter.

The optical fibre cladding is made of fused quartz glass.

Said optical fibre section is formed directly in the fibre line to be protected.

Said optical fibre section is further included into the fibre line to be protected, e.g. by splicing or connecting by optical connectors.

Furthermore, said optical fibre section may be cylindrical, with the core having a constant diameter throughout the length of said section, and the cladding diameter at least at one part of length *L* ≥ *10·D* of said optical fibre section being in the range *D* < *d* ≤ *min* (*4D, 40* µ*m*), where *D* is the mode field diameter.

Said cylindrical optical fibre section can be formed directly in or further included into the fibre line to be protected, e.g. by splicing or connecting by optical connectors.

The device in accordance with the present invention employs a quite different physical mechanism of arresting the optical discharge wave propagation, namely, by reducing the laser radiation absorption factor in plasma of the optical discharge propagating through the optical fibre core, with the plasma density being reduced.

The authors have found the phenomenon of deformation and even complete destruction of the optical fibre quartz cladding by mechanical and thermal exposure to plasma of the optical discharge propagating through the optical fibre exposed to laser radiation.

When the core substance is heated by the optical discharge wave up to about 5000K with the substance volume unchanged, pressure in the plasma region reaches about 10⁴ atm.

On the surface of the quartz cladding of a standard optical fibre with 125 µm diameter, temperature increases by 200÷300K only after the optical discharge have passed through the core. As this takes place, the optical fibre surface is under pressure of 1 atm. But as known from experiments, fused quartz glass fibres exhibit a reasonably high mechanical strength, which prevents destruction of the optical fibre cladding under such conditions, and this in turn creates conditions for propagation of the optical discharge wave through the optical fibre.

If, however, a part of the fused quartz cladding is removed at a part of the optical fibre (e.g. by locally reducing the cladding diameter) so that the remaining part of the cladding were heated by plasma of the optical discharge wave to a temperature at which, under excessive pressure created by the plasma, deformation (expansion even up to complete mechanical distortion) of the fibre cladding would be possible, leading to plasma density reduction and, as a consequence, to reduced absorption of laser radiation therein and respectively reduced energy release, the propagation of the optical discharge wave will cease.

The higher the laser radiation power, the greater is the pressure and temperature in the optical discharge plasma and the faster the optical fibre will be distorted and the optical discharge wave arrested. Thus, with increasing the laser radiation power, the reliability of the device is only improved (in contrast to the most pertinent prior art). While the fused quartz cladding diameter is reduced, the optical fibre core is not changed, this providing a small perturbation of waveguide channel parameters, again in contrast to the most pertinent prior art.

Dimensions of the optical fibre section with a reduced diameter of the quartz glass cladding are specified so that to provide a desired sensitivity of the device and maximum allowable value of distortions introduced into waveguide properties of the optical fibre.

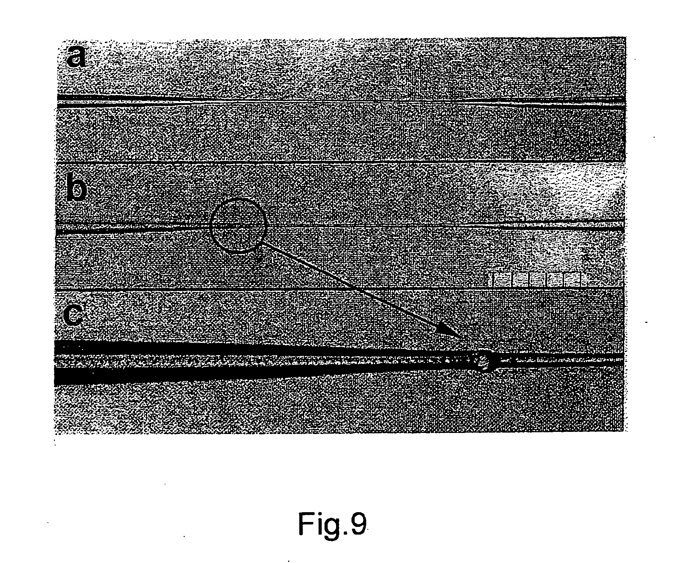

The authors conducted several series of experiments in order to determine whether it is possible to arrest the discharge wave propagation through the optical fibre. The experiments were conducted as follows. An optical fibre section with a fused quartz cladding of standard diameter 125 µm was etched in hydrofluoric acid solution. After etching the cladding diameter reduced, the final diameter value being controlled by the etching time. Radiation of a continuously operated, optical fibre laser with waves of different power was then input to the optical fibre at one side. At the other end of the optical fibre, an optical discharge wave was initiated, which propagated through the optical fibre towards the laser radiation and passed through the section with etched fused quartz cladding. In different experiments there were used optical fibres with different core parameters, different values of the quartz cladding diameter in the etched region, and optical fibre lasers with different radiation wavelengths (from the series of 1.06 µm, 1.24 µm and 1.48 µm). In every experiment, the optical discharge wave either passed through the section with reduced cladding diameter, or the process of propagation was interrupted (see Fig.8 and Fig.9). Fig.8 shows a photograph of an operated device for protecting optical communication lines, implementing the method in accordance with the invention, wherein 11 are cavities or voids formed in the optical fibre core region after passage of the optical discharge wave. Here, the shape of the voids is different from that seen in Fig.2. Numeral 12 shows the region of destruction of the optical fibre fused quartz cladding by plasma pressure in the slow optical discharge wave. Scale of the photograph is as follows: height of Fig.8 is 65 µm, and width is 250 µm. The laser radiation propagated from left to right.

Fig.9 shows a photograph of a device for protecting fibre lines in optical communication lines against destruction by laser radiation, according to the invention, wherein a is a view of the device before exciting the optical discharge wave in the optical fibre; b is a view of the device after operation, i.e. after arresting the optical discharge wave. The arrest area is encircled. The optical fibre was not damaged at operation in contrast to that in Fig.8. Scale of image at Fig.9, a and b is as follows: each scale division in Fig.9,b corresponds to 0.1 mm; Fig.9, c is the enlarged image of the area approximately encircled in Fig.9,b. Scale: full frame width corresponds to 1 mm. Laser radiation propagated from right to left.

Despite the great number of parameters changing on experiment-by-experiment basis (concentrations of various impurities in the core, core diameter, difference between refractive indices of the core and the cladding, radiation wavelength, optical fibre cladding diameter in the etched region, radiation power input to the optical fibre), the obtained results demonstrated that the process of arresting the optical discharge wave is defined by the diameter of radiation mode field in the optical fibre and the diameter of optical fibre cladding in the region where it was reduced by etching.

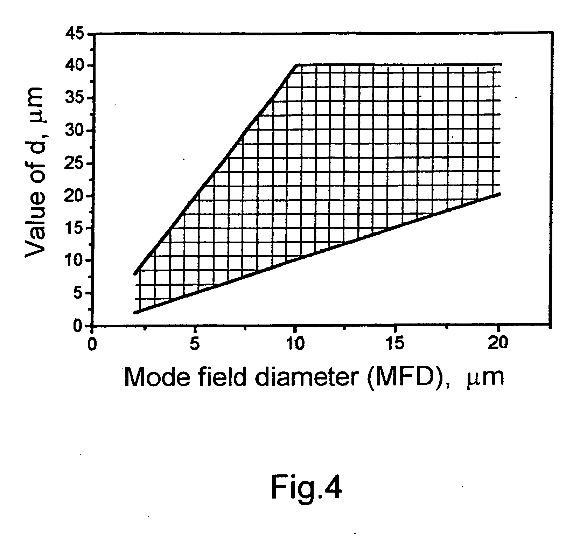

Particularly, the experiments performed by the authors showed that arresting of the optical discharge wave as it propagates through the optical fibre with reduced diameter cladding (denote the diameter as parameter *d* of the cross-section of the optical fibre section in question) occurred in the case where the optical fibre cladding parameter *d* did not exceeded the smallest of the values (*4·D*) and *(40* µ*m)*, i.e. where *d* ≤ *min (4D, 40* µ*m*)*,* where *D* is the diameter of the mode field in a single-mode optical fibre through which laser radiation propagates (before reducing the cladding dimensions). (In the fibre optics background art the value is often referred to as mode field diameter, MFD). On the other hand, to restrict distortions of various type, which can be introduced by such narrowing into the radiation transmission channel, the smallest value of parameter *d* should be greater than *D* (see Fig.4).

Additionally, the same experiments showed that to halt the process of optical discharge wave propagation it is necessary that length *L* of the optical fibre part with a reduced value of parameter *d* were no smaller than *10·D*, i.e. *L* ≥ *10·D* (see e.g. Fig.9).

To arrest the optical discharge wave, another cross-section shapes (different from circular) of the optical fibre with reduced cladding dimensions can be also used. In such a case, parameter *d* is defined as double minimal distance from the geometrical centre of the optical fibre core cross-section to the boundary of the fused quartz cladding (in case of cylindrical optical fibre, the parameter definition coincides with the definition of *d* given before as the optical fibre cladding diameter in the narrowing region). But as axially symmetric (or nearly axially symmetric) fibre elements are much easier to fabricate, only such structures are presented as examples.

Therefore, an inventive device for protecting fibre lines against destruction by optical discharge wave comprises an optical fibre section, wherein at some part thereof having length *L* a parameter *d* of the optical fibre is reduced to the values shown in Fig.4 by hatched area. In so doing, the optical fibre core remains substantially unchanged, and the optical fibre waveguide properties suffer minimal changes.

In the final analysis, a fibre line is protected by disposing therein at least one optical fibre section with a changed cross-section shape, or by changing the cross-section shape of an optical fibre section in the line to be protected so that
a) the optical fibre core diameter remains unchanged, and
b) parameter *d* of the optical fibre in the part with changed cross-section is *d* ≤ *min (4D, 40*µ*m),* the part having length *L* ≥ *10·D.*

The inventions will be further explained by description of an exemplary preferred embodiment with reference to the accompanying drawings, wherein similar elements are denoted by the same numerals throughout the drawings.
Fig.1 is a schematic diagram of propagation of an optical discharge wave through an optical fibre, according to the prior art;
Fig.2 is a photograph of periodic structure of voids in the optical fibre core (optical fibre LEAF, Corning), formed under exposure to radiation of Nd:YAG laser with 1.06 µm wavelength and 4.2 W power. The radiation propagated from left to right. Scale: every division is 10 µm;
Fig.3 is a schematic diagram showing implementation of a method for protecting an optical fibre against destruction by laser radiation, according to the prior art;
Fig.4 is a plot illustrating values of diameter *d* of fused quartz glass cladding, which provide functioning of protection elements according to the invention, depending on the mode field diameter of the optical fibre (hatched region);
Fig.5 is a relationship obtained experimentally by measuring the dependence of a minimum power of laser radiation in the optical fibre core required to sustain the optical discharge wave propagation, for optical fibres of different types: germanosilicate fibres (i.e. with a core containing mainly SiO₂ and GeO₂) and phosphosilicate fibre;
Fig.6 is a schematic diagram illustrating a device for protecting an optical fibre against destruction by laser radiation, in accordance with the invention;
Fig.7 is a cross-section of the device in accordance with the invention at line A-A (see Fig.6);
Fig.8 is a photograph of operated device for protecting fibre communication lines, implementing the method in accordance with the invention. Scale: height = 65 µm, width = 250 µm. Laser radiation propagated from left to right;
Fig.9 is a photograph of a device for protecting optical fibres in optical communication lines against destruction by laser radiation according to the invention, wherein a is a view of the device before exciting the optical discharge wave in the optical fibre; b is a view of the device upon operating - arresting the optical discharge wave; c is an enlarged image of the region approximately shown by circle in Fig.9,b.

Having been initiated in an optical fibre, optical discharge travels towards laser radiation (see. Fig.1), and if there are no obstacles on its path, the discharge will pass the entire distance through the optical fibre to the radiation source. After the optical discharge passage, the optical fibre loses its waveguide properties due to damage suffered by the structure of the optical fibre core (see Fig.2).

Fig. 6 shows a schematic diagram of a possible embodiment of a device for protecting an optical fibre against destruction by laser radiation in accordance with the present invention. The device for protecting an optical fibre comprises a section of an optical fibre as shown in Fig.6, where 7 is an optical fibre core, 6 is an optical fibre cladding, 8 are dashed lines showing the position of the mode field in the optical fibre. The distance between them is equal to the diameter (*D*) of the laser radiation mode field in the optical fibre. Numeral 10 shows the optical fibre part with a reduced diameter of the reflecting cladding. Fig.7 shows the cross-section along line A-A.

The device is included, e.g. by splicing, into a protected fibre line and functions as follows. When an optical discharge wave propagates through the optical fibre, as described before, pressures of about 10⁴ atmospheres are produced by high temperature in the core 7 region. The 10⁴ atm. value is close to the destruction limit of the optical fibre material heated by heat conductance and radiation from the plasma region up to temperatures of several hundreds degrees, therefore, at a quite thin optical fibre cladding this phenomenon leads to optical fibre destruction, pressure drop in the core region, drastic decrease in density of the plasma absorbing laser radiation, respective reduction of radiation absorption, and, as consequence, to arresting the optical discharge wave.

Therefore, at least one optical fibre section with a reduced thickness fused quartz cladding 6 is provided in fibre lines, while the core 7 is absolutely non-deformed as shown in Fig.6. This operation, on one hand, does not introduce significant changes into the signal propagation channel (the core is not deformed), and on the other hand, such protecting devices are easy to fabricate: the optical fibre cladding diameter can be reduced by simple etching.

An implemented embodiment of a device for protecting optical fibres against destruction by laser radiation is shown at photograph of Fig.9. The device comprises an optical fibre section with the mode field diameter of 8.9 µm, the external fibre diameter being reduced at a part (in this case having 1 mm length) by etching the part in HF acid solution. Laser radiation propagated from right to left. Fig.9,a shows the device before operation. Radiation having a power of up to 5W passed through it unimpeded. Fig.9,b shows the same device after initiating outside thereof an optical discharge wave, which propagated from left to right through the optical fibre. As the wave has reached the optical fibre location where the cladding diameter was about 30 µm, its propagation ceased. Minimum diameter of the optical fibre in the device shown at Fig.9 was 20 µm.

To the left of the arrest point (shown by circle at Fig.9,b) the optical fibre destruction character is the same as in the optical fibre with a normal fused quartz cladding diameter - a periodic sequence of voids in the optical fibre core. Only a short distance before the arrest point, the voids increase in size, and the optical discharge propagation process ceases. The discharge propagation arrest is accompanied either by expansion of the optical fibre section, as in Fig.9,b,c, or by destruction of the optical fibre in the arrest point (Fig.8).

A device for protecting fibre optical fibres can be also implemented by forming an optical fibre section with a reduced diameter of fused quartz cladding immediately at the fibre of the optical line to be protected, rather than on a dedicated section of the optical fibre, which is then spliced into the optical fibre line to be protected. In this case there is no need for additional splicing of optical fibres, which leads to additional in-line losses of radiation, but implies in-the-field fabrication of respective narrowings in optical fibres, this having its negative effects.

To protect long-distance telecommunication lines, such protection devices should be periodically disposed along the line so that only one period fails where an optical discharge wave unexpectedly appears in the telecommunication network.

The device in accordance with the invention is applicable in telecommunication lines, specifically, for protecting optical fibres from damage by laser radiation. The devices can be further used in processes of laser treatment of materials, in laser surgery and other medical laser systems for protecting the emitting laser.

## Claims

1. A device for protecting an optical fibre line (1) against destruction by laser radiation, comprising a section of the optical fibre line (1) having a core (7) with a constant diameter throughout the section, and a cladding (6) having at least one part (10) of the section with a length L ≥ 10xD, where a cross-section parameter (d) is reduced to the range D < d ≤ min (4xD, 40 µm) by partial removal of a cladding material, where D is mode field diameter.

2. The device according to claim 1, wherein said optical fibre line (1) is made of silica based glass.

3. The device according to claim 1, wherein the cladding part (10) with reduced parameter (d) is formed in situ in the fibre line (1) to be protected.

4. The device according to claim 1, wherein the cladding part (10) with reduced parameter (d) is fabricated by etching.

5. The device according to claim 1, wherein the cladding part (10) with reduced parameter (d) is coaxial with the core (7).

6. The device according to claim 1, wherein the cladding part (10) with reduced parameter (d) has a cylindrical shape.

7. The device according to claim 1, wherein said optical fibre section is further included into the fibre line (1) to be protected, e.g. by splicing or connecting by optical connectors.

## Patentansprüche

1. Vorrichtung zum Schützen einer Lichtleitfaserleitung (1) gegen Zerstörung durch Laserstrahlung, die einen Abschnitt der Lichtleitfaserleitung (1) umfasst, der einen Kern (7) mit einem über den gesamten Abschnitt hinweg konstanten Durchmesser besitzt und einen Mantel (6) besitzt, der wenigstens einen Teil (10) des Abschnitts mit einer Länge L ≥ 10 x D umfasst, in dem ein Querschnittsparameter (d) auf den Bereich D < d ≤ min(4 x D, 40 µm) verringert ist, indem ein Mantelmaterial teilweise entfernt ist, wobei D ein Modenfelddurchmesser ist.

2. Vorrichtung nach Anspruch 1, wobei die Lichtleitfaserleitung (1) aus Glas auf Siliciumdioxid-Basis hergestellt ist.

3. Vorrichtung nach Anspruch 1, wobei der Mantelteil (10) mit reduziertem Parameter (d) vor Ort in der zu schützenden Faserleitung (1) gebildet wird.

4. Vorrichtung nach Anspruch 1, wobei der Mantelteil (10) mit reduziertem Parameter (d) durch Ätzen hergestellt wird.

5. Vorrichtung nach Anspruch 1, wobei der Mantelteil (10) mit reduziertem Parameter (d) zu dem Kern (7) koaxial ist.

6. Vorrichtung nach Anspruch 1, wobei der Mantelteil (10) mit reduziertem Parameter (d) eine zylindrische Form hat.

7. Vorrichtung nach Anspruch 1, wobei der Lichtleitfaserabschnitt ferner in der zu schützenden Faserleitung (1) aufgenommen ist, z. B. durch Spleißen oder durch Verbinden mit optischen Verbindern.

## Revendications

1. Dispositif pour protéger une ligne (1) de fibre optique contre une destruction par un rayonnement laser, comportant une section de la ligne (1) de fibre optique ayant un coeur (7) d'un diamètre constant sur toute la section, et une gaine (6) ayant au moins une partie (10) de la section d'une longueur L ≥ 10xD, où un paramètre (d) de section transversale est réduit à la plage D < d ≤ min (4xD, 40 µm) par un enlèvement partiel de la matière de la gaine, où D est le diamètre du mode fondamental.

2. Dispositif selon la revendication 1, dans lequel ladite ligne (1) de fibre optique est réalisée en verre à base de silice.

3. Dispositif selon la revendication 1, dans lequel la partie de gaine (10) de paramètre réduit (d) est formée in situ dans la ligne (1) de fibre devant être protégée.

4. Dispositif selon la revendication 1, dans lequel la partie de gaine (10) ayant le paramètre réduit (d) est fabriqué par attaque chimique.

5. Dispositif selon la revendication 1, dans lequel la partie de gaine (10) de paramètre réduit (d) est coaxiale avec le coeur (7).

6. Dispositif selon la revendication 1, dans lequel la partie de gaine (10) ayant le paramètre réduit (d) a une forme cylindrique.

7. Dispositif selon la revendication 1, dans lequel la section de fibre optique est en outre incorporée dans la ligne de fibre (1) afin d'être protégée, par exemple par la réalisation d'une épissure ou d'une connexion par des connecteurs optiques.
